# EUROPÄISCHE PATENTSCHRIFT

(11) **EP 2 451 552 B1**
(45) Veröffentlichungstag und Bekanntmachung des Hinweises auf die Patenterteilung: **14.01.2015**
(21) Anmeldenummer: 10724284.4
(22) Anmeldetag: 21.05.2010
(51) Int. Cl.: B01D 29/15, B01D 37/02

(54) **ANSCHWEMMFILTER ZUR VERWENDUNG BEI EINEM SOLCHEN FILTER**
PRECOAT FILTER FOR USE IN A FILTER OF THIS TYPE
FILTRE À ALLUVIONS DESTINÉ À UN TEL FILTRE

(30) Priorität: 07.07.2009 DE 102009032201
(43) Veröffentlichungstag der Anmeldung: 16.05.2012
(73) Patentinhaber: KHS GmbH, 44143 Dortmund (DE)
(72) Erfinder: SANDER, Ulrich, 67549 Worms (DE)
(86) Internationale Anmeldenummer: PCT/EP2010/003152
(87) Internationale Veröffentlichungsnummer: WO 2011/003490

(56) Entgegenhaltungen:
- EP-A1- 0 810 019
- WO-A1-01/95992
- FR-A- 1 040 053
- FR-A- 1 085 481
- US-A- 2 731 107

## Beschreibung

Die Erfindung bezieht sich auf Anschwemmfilter gemäß Oberbegriff Patentanspruch 1 und dabei insbesondere auf Anschwemmfilter zum Filtern oder Filtrieren von Getränken.

Anschwemmfilter jeweils mit einer Vielzahl von rohrartigen Filterelementen oder Filterkerzen, auch in Ausbildung als Kesselfilter, sind insbesondere zur Getränkefiltration bekannt. Die bei bekannten Anschwemmfiltern starr ausgebildeten Filterelemente sind an einer Trennwand zwischen einem Unfiltratraum, dem das zu filtrierende flüssige Medium versetzt mit einem Filterhilfsmittel unter Druck (bis 9 bar Überdruck) zugeführt wird, und einem Filtratraum zum Sammeln des filtrierten Medium oder Produktes (Filtrat) derart angeordnet, dass sie in den Unfiltratraum mit einem rohrförmigen Filter- oder Siebabschnitt hineinreichen, der als Stützschicht für den aus dem Filterhilfsmittel gebildeten und von dem zu filtrierenden Produkt durchströmten Filterkuchen dient. Durch den Abstand, den die einzelnen Filterelemente voneinander aufweisen, sind das maximale Trubaufnahmevermögen und somit die maximale Standzeit des Filters definiert. Filteranlagen werden daher Jeweils nur über eine vorgegebene Standzeit betrieben. Im Anschluss daran erfolgt jeweils ein Spülen des Filters zum Entfernen des angeschwemmten Filterhilfsmittels mit den aufgenommenen Trubstoffen.

Einen solchen Anschwemmfilter offenbart EP 0 810 019 A1, bei welchem die Filterkerzen als aus Edelstahl gefertigte Spaltkerzenfilter ausgebildet sind, die mit einem speziellen Wickelverfahren auf einer Tragstruktur aufgebracht wurden.

Insbesondere dann, wenn beispielsweise durch eine Fehlbedienung eine übermäßig hohe Dosierung des Filterhilfsmittels erfolgt, kann es innerhalb einer noch nicht abgelaufenen Standzeit und unbemerkt vom Bedienungspersonal zu einem Zusammenwachsen der einzelnen Filterkuchen an den starren Filterelementen, d.h. zu einer Ausbildung des Filterkuchens auch im Raum zwischen den Filterelementen kommen, und zwar mit der Folge, dass die wirksame Filteroberfläche drastisch reduziert wird.

Hierdurch kommt es dann zu einer erhöhten, zum Teil auch einseitigen erhöhten Belastung an den Filterelementen in der Weise, dass diese an ihrem Filter- oder Siebabschnitt insbesondere durch Biegen um Achsen quer zur Filterelementlängsachse dauerhaft verformt werden und sich aufgrund dieser Verformung eine irreversible Änderung, d.h. insbesondere auch Vergrößerung der Filteröffnungen oder Filterspalten eintritt. Derart verformte Filterelemente können dann nicht weiter verwendet werden und müssen ausgetauscht werden, was bei der Vielzahl der beispielsweise in einem Kesselfilter verwendeten Filterelemente (bis zu 800 Filterelemente je Kesselfilter) und bei dem hohen Preis der Filterelemente zu hohen Materialkosten führt. Weitere Kosten ergeben sich durch den für das Austauschen erforderlichen Arbeitsaufwand und den Produktionsausfall, der mehrere Tage oder Wochen betragen kann.

Aufgabe der Erfindung ist es, Anschwemmfilter aufzuzeigen, bei welchen eine derartige bleibende Verformung und ein dadurch bedingtes Unbrauchbarwerden vermieden sind. Zur Lösung dieser Aufgabe sind Anschwemmfilter entsprechend dem Patentanspruch 1 ausgebildet.

Durch die erfindungsgemäße Ausbildung wird ein bleibendes Verformen und damit Unbrauchbarwerden der Filterelemente während des normalen Filterbetriebes und innerhalb der jeweiligen Standzeit eines Anschwemmfilters wirksam vermieden, und zwar selbst dann, wenn es innerhalb der normalen Standzeit zu einseitigen Belastungen der Filterelemente beispielsweise durch eine erhöhte Dosierung des Filterhilfsmittels kommen sollte. Durch die erfindungsgemäße Ausbildung ist seitliches Nachgeben oder Ausweichen des jeweiligen Filter- oder Siebabschnittes möglich, sodass dieser bei einseitiger Belastung nicht verformt wird und sich damit auch keine irreversiblen Änderungen des Maßes der Filteröffnungen oder Filterspalten ergibt.

Bevorzugt sind die Filterelemente oder Filterkerzen bzw. deren verformbare keine Filteröffnungen oder Filterspalten aufweisenden Abschnitte federelastisch derart ausgeführt, dass ein durch erhöhte einseitige Belastung zur Seite bewegter Filter-oder Siebabschnitt nach dem Wegfall dieser Belastung wieder in seine Ausgangslage zurückbewegt wird.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in Teildarstellung eine Trag- oder Trennwand eines Filterkessels eines Anschwemmfilters zusammen mit drei der dort vorgesehenen Filterelemente oder Filterkerzen gemäß der Erfindung;
- Fig. 2: eine der Filterkerzen der Figur 1 in vergrößerter Einzeldarstellung.

In den Figuren ist 1 eine Trag- oder Trennwand, die den Innenraum eines nach außen hin abgeschlossenen und nicht dargestellten Filterkessels in einen unteren Unfiltratraum 2 und einen oberen Filtratraum 3 trennt. An der Trennwand 1 ist eine Vielzahl von Filterkerzen 4 in einem vorgegebenen Abstand (Teilung) vorgesehen, die (Filterkerzen) mit ihren Achsen jeweils in vertikaler oder im Wesentlichen in vertikaler Richtung orientiert unter Verwendung von Ringdichtungen 5 und 6 abgedichtet durch die Trennwand 1 hindurchgeführt sind und von der Trennwand 1 in den Unfiltratraum 2 hineinreichen.

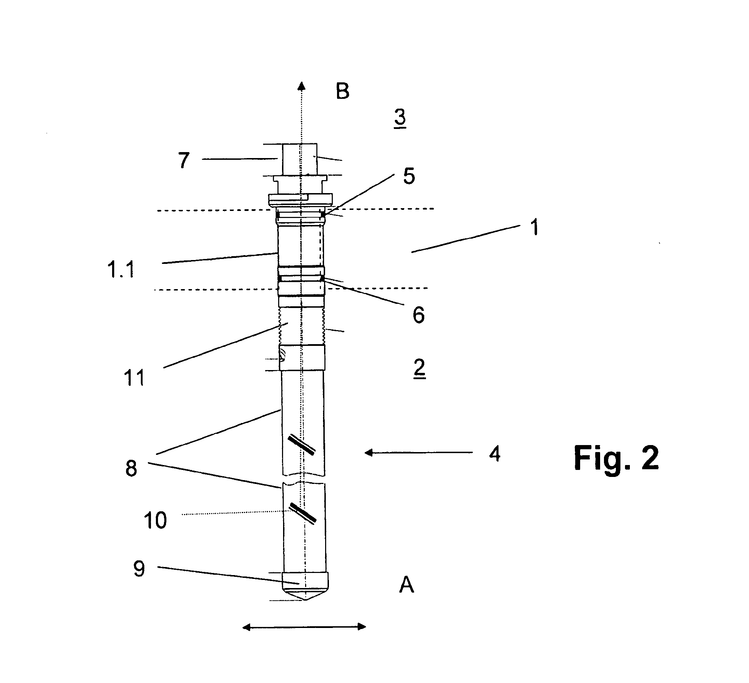

Wie insbesondere der Figur 2 zu entnehmen, besteht jede Filterkerze u.a. aus einem rohrartigen Kopfstück 7, mit welchem die Filterkerze 4 in der zugehörigen Öffnung 1.1 der Trennwand passend und durch die beiden Ringdichtungen 5 und 6 abgedichtet aufgenommen in geeigneter Weise wiederlösbar verriegelt ist. Jede Filterkerze 4 besitzt weiterhin einen Filter- oder Siebabschnitt in Form eines Spaltrohres 8, welches an seinem unteren, dem Kopfstück 7 abgewandten Ende durch ein Verschlussstück 9 dicht verschlossen ist und an seiner Mantelfläche eine Vielzahl von Filteröffnungen 10 mit exakt definiertem Öffnungsmaß aufweist, beispielsweise in Form jeweils eines Spalts mit einer Spaltbreite oder einem Spaltmaß im Bereich zwischen 10µm und 100µm, vorzugsweise im Bereich zwischen etwa 20µm bis 40µm.

Zwischen dem Spaltrohr 8 und dem Kopfstück 7 sind die Filterkerzen 4 jeweils mit einem Abschnitt ausgebildet, der keine Filteröffnungen oder -spalten 10 besitzt, aber im Vergleich zum Kopfstück 7 und Spaltrohr 8 eine erhöhte Flexibilität aufweist. Bei der dargestellten Ausführungsform ist dieser Abschnitt von einem rippenrohr- oder faltenbalkenartigen Rohr- oder Zwischenstück 11 gebildet, das jeweils dicht mit dem Kopfstück 7 und mit dem Spaltrohr 8 verbunden ist. Innerhalb jeder Filterkerze 4 ist somit ein Filterkerzeninnenraum oder Kanal gebildet, der von dem Unfiltratraum 2 lediglich durch die von Filteröffnungen 10 gebildete Filter- oder Siebstruktur zugänglich ist und an dem oberen, offenen Ende des Kopfstückes 7 in den Filtratraum 3 mündet.

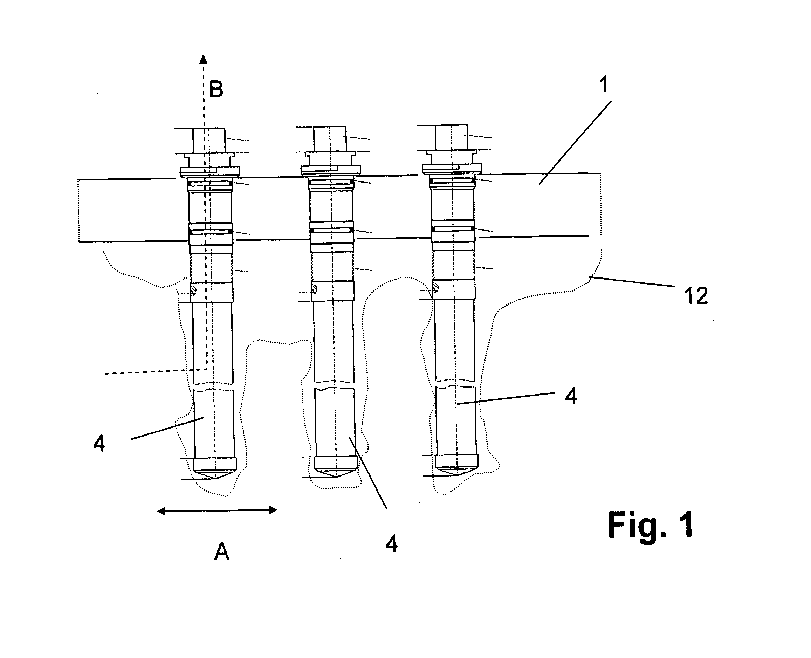

Durch das Zwischenstück 11 ist ein seitliches bzw. radiales Ausweichen jeder Filterkerze 4 an ihrem in den Unfiltratraum 2 hineinreichenden Abschnitt oder Spaltrohr 8 möglich, wie dies in der Figur 1 mit dem Doppelpfeil A angedeutet ist. Die für dieses Ausweichen notwendige vorzugsweise elastische Verformung erfolgt ausschließlich in dem keine Filteröffnungen aufweisenden Zwischenstück 11, ohne dass es zu einer Verformung des Spaltrohres 8 kommt.

Hergestellt sind die Filterkerzen 4 bzw. deren Komponenten (Kopfstück 7, Spaltrohr 8, Verschlusselement 9 sowie Zwischenstück 11) aus einem metallischen Werkstoff, vorzugsweise aus Edelstahl, beispielsweise V4A-Stahl. Grundsätzlich besteht aber auch die Möglichkeit, die Filterkerzen 4 vollständig oder zumindest in Teilbereichen aus Kunststoff zu fertigen. Für das Zwischenstück 11 wird in jedem Fall bevorzugt ein Material verwendet, welches gewährleistet, dass das Zwischenstück 11 bei einem seitlichen oder radialen Auslenken des Spaltrohres 8 (selbstverständlich innerhalb gewisser Grenzen) keine bleibende Verformung erfährt, vielmehr nach dem Wegfall einer Belastung eine Rückkehr des Spaltrohres 8 in die Ausgangslage bewirkt, in der das Spaltrohr 8 wieder achsgleich mit dem Kopfstück 7 angeordnet ist.

Die Arbeitsweise eines mit den Filterkerzen 4 ausgestatteten Anschwemmfilters entspricht der dem Fachmann bekannten Arbeitsweise, bei der das Unfiltrat mit einem beigemischten Filterhilfsmittel dem Unfiltratraum 2 unter Druck, beispielsweise mit einem Überdruck bis zu 9 bar zugeführt wird. Als Filterhilfsmittel eignen sich grundsätzlich die üblicherweise für die Anschwemmfiltration insbesondere auch von Getränken verwendeten Filterhilfsmittel, wie z.B. Kieselgur, Zellulose, Polymere usw. Das Filterhilfsmittel bildet innerhalb der jeweiligen Standzeit normalerweise im Wesentlichen nur um die in den Unfiltratraum 2 hineinragenden Filterkerzen 4 einen Filterkuchen aus. Durch das zu filtrierende flüssige Medium, welches entsprechend dem Pfeil B vom Unfiltratraum 2 durch den Filterkuchen, durch die Filteröffnungen 8 und durch den Innenraum jeder Filterkerze 4 schließlich in den Filtratraum 3 strömt, wird auf jedes Spaltrohr 8 ein nicht unerheblicher radialer Druck ausgeübt, der aber bei Ausbildung des Filterkuchens nur um die Spaltrohre 8 zu einer gleichmäßigen oder im Wesentlichen gleichmäßigen Druckverteilung am Umfang jedes Spaltrohres 8 führt, so dass es zu keiner einseitigen Belastung kommt.

Bei einer überhöhten Beimischung von Filterhilfsmittel kann dieses, wie in der in der Figur 1 mit der unterbrochenen Linie 12 angedeutet ist, zunehmend auch den Raum zwischen den Filterkerzen 4 ausfüllen, und zwar in einer rein zufälligen Verteilung. Dies führt dann zu unkontrollierten, insbesondere auch einseitigen erhöhten Druckbelastungen an den Filterkerzen 4, was bei starrer Ausbildung eine irreversible bleibende Verformung der Filterkerzen zur Folge hat, und zwar u.a. mit einer Aufweitung einzelnen Filteröffnungen oder Filterspalten 10, wie dies in der Figur 1 mit der unterbrochenen Linie 10.1 angedeutet ist. Die Einhaltung einer exakten Spaltbreite ist aber für die angestrebte Filterwirkung unerlässlich. Jede Verengung der Spaltbreite führt zumindest zu einer Reduzierung der Filterleistung. Jede Vergrößerung oder Aufweitung der Spaltbreite führt aber dazu, dass die angestrebte Filterwirkung verloren geht.

Durch das Zwischenstück 11 ist bei den erfindungsgemäßen Filterkerzen 4 ein seitliches bzw. radiales Ausweichen der Spaltrohre 8 möglich, womit die Gefahr einer bleibenden Verformung des Spaltrohres 8 und einer Aufweitung einzelnen Filteröffnungen oder Filterspalten 10 nicht besteht.

Die rippenrohr- oder faltenbalgartige Ausbildung des Zwischenstücks 11 ermöglicht nicht nur das seitliche, vorzugsweise federelastische Ausweichen des Filter- oder Spaltrohres 8 (Doppelpfeil A), sondern durch die rippenrohr- oder faltenbalgartige Ausbildung weist das rohrartige Zwischenstück 11 trotz seiner elastischen Eigenschaften auch eine ausreichend hohe Druckfestigkeit auf, sodass es bei dem relativ hohen Druck, mit dem das Filtrat dem Unfiltratraum 2 zugeführt wird, bzw. durch die hieraus resultierenden, auf die Außenfläche des Zwischenstücks 11 einwirkenden radialen Kräfte nicht verformt wird.

Die Erfindung wurde voranstehend an einem Ausführungsbeispiel beschrieben. Es versteht sich, dass zahlreiche Änderungen sowie Abwandlungen möglich sind. So wurde vorstehend davon ausgegangen, dass der Filter- bzw. Siebabschnitt der Filterkerzen 4 eine Vielzahl von jeweils als Filterspalt ausgeführten Filteröffnungen 10 besitzt. Grundsätzlich sind auch andere Ausführungen denkbar, beispielsweise in der Form, dass der Filter- bzw. Siebabschnitt nur einen die Achse der Filterkerze wendelartig in mehreren Windungen umschließenden Filterspalt oder aber mehrere derartige Filterspalten aufweist. Insbesondere ist die Trag- oder Trennwand hierbei nur eine Variante, da in analoger Weise eine hier nicht gezeigte Registerverrohrung zur Anwendung kommen kann, hierfür ist die beschriebene Filterkerzenanordnung bzw. deren spezieller Aufbau ebenfalls sehr vorteilhaft anwendbar.

### Bezugszeichenliste

- 1: Trag- oder Trennwand
- 1.1: Öffnung
- 2: Unfiltratraum
- 3: Filtratraum
- 4: Filterkerze
- 5,6: Ringdichtung
- 7: Kopfstück
- 8: Filter- oder Spaltrohr
- 9: Verschlussstück
- 10: Filteröffnung- oder Spalt
- 11: Zwischenstück
- 12: Filterkuchen
- A: seitliches Auslenken oder Ausweichen des Filter- oder Spaltrohres
- B: Strömung des zu filternden Mediums durch die Filterkerzen 4

## Patentansprüche

1. Anschwemmfilter zum Filtern von flüssigen Medien oder Produkten, insbesonderen zum Filtern von Getränken, mit wenigstens einer einen Unfiltratraum (2) und einen Filtratraum (3) trennenden Trennwand (1) und mit mehreren an der Trennwand (1) angeordneten Filterelementen oder Filterkerzen (4), die jeweils mit wenigstens einem eine Filter- oder Siebstruktur aufweisenden Filter- oder Siebabschnitt (8) in den Unfiltratraum (2) hineinragen, wobei die Filter- oder Siebabschnitte von Filter- oder Spaltrohren (8) gebildet sind und die Filter- oder Siebstrukturen jeweils eine Vielzahl von Filteröffnungen (10) aufweisen, **dadurch gekennzeichnet, dass**
die Filterelemente (4) zwischen der Trennwand (3) und Ihrem die Filter- oder Siebstruktur aufweisenden Filter- oder Siebabschnitt (8) mit wenigstens einem Abschnitt (11) erhöhter Flexibilität ausgebildet sind, der ein Ausweichen des Filterabschnittes (8) bei einseitiger Druckbelastung ermöglicht, wobei der Abschnitt (11) erhöhter Flexibilität rippenrohr- oder faltenbalgartig und elastisch verformbar ausgeführt ist, und wobei der erhöhter Flexibilität Abschnitt (11) aus einem metallischen Material, bevorzugt aus Edelstahl besteht.

2. Anschwemmfilter nach Anspruch 1, **dadurch gekennzeichnet, dass** die Filterelemente (4) zumindest an ihren Filter- oder Siebabschnitt (8) starrer ausgebildet sind als an den Abschnitten (11) erhöhter Flexibilität.

3. Anschwemmfilter nach Anspruch 1 oder 2, **dadurch gekennzeichnet, dass** die Abschnitte (11) erhöhter Flexibilität die Filter- oder Siebstruktur nicht aufweisen.

4. Anschwemmfilter nach einem der vorhergehenden Ansprüche, dadurch gekennzeichnen, dass die Filterelemente (4) zumindest in Teilbereichen aus einem metallischen Werkstoff, beispielsweise aus Edelstahl oder aus Kunststoff gefertigt sind.

## Claims

1. Precoat filter for the filtering of liquid media or products, in particular for filtering beverages, with at least one partition wall (1) separating an unfiltered material space (2) and a filtered material space (3), and with a plurality of filter elements or candle filters (4), which in each case project into the unfiltered material space (2) with at least one filtering or sieving section (8), having a filtering or sieving structure, wherein the filtering or sieving sections are formed from filter or gap tubes (8), and the filtering or sieving structures comprise in each case a plurality of filter apertures (10), **characterised in that**
the filter elements (4) are formed between the partition wall (3) and their filtering or sieving section (8), exhibiting the filtering or sieving structure, with at least one section (11) of increased flexibility, which allows for a deviation of the filtering section (8) in the event of one-sided pressure loading, wherein the section (11) of increased flexibility is designed in the form of a ribbed tube or bellows element and is elastically deformable, and wherein the section (11) of increased flexibility consists of a metallic material, preferably of stainless steel.

2. Precoat filter according to claim 1, **characterised in that** the filter elements (4) are designed as more rigid at their filtering or sieving section (8) than at the sections (11) of increased flexibility.

3. Precoat filter according to claim 1 or 2, **characterised in that** the sections (11) of increased flexibility do not exhibit the filtering or sieving structure.

4. Precoat filter according to any one of the preceding claims, **characterised in that** the filter elements (4) are made, at least in partial areas, of a metallic material, such as stainless steel, or of plastic.

## Revendications

1. Filtre à alluvions pour filtrer des milieux ou des produits liquides, en particulier pour filtrer des boissons, comprenant au moins une cloison de séparation (1) séparant un espace pour produits non filtrés (2) et un espace pour produits filtrés (3) et comprenant plusieurs éléments de filtrage ou bougies de filtrage (4) disposés au niveau de la cloison de séparation (1), lesquels dépassent respectivement par au moins une section de filtrage ou de criblage (8) présentant une structure de filtrage ou de criblage, à l'intérieur de l'espace pour produits non filtrés (2), sachant que les sections de filtrage ou de criblage sont formées par des tubes de filtrage ou des tubes à entrefer (8) et que les structures de filtrage ou de criblage présentent respectivement une pluralité d'ouvertures de filtrage (10),
**caractérisé en ce que**
les éléments de filtrage (4) sont réalisés entre la cloison de séparation (3) et leur section de filtrage ou de criblage (8) présentant la structure de filtrage ou de criblage et comprenant au moins une section (11) à flexibilité élevée, qui permet lors de l'application d'une pression d'un côté un affaissement de la section de filtrage (8), sachant que la section (11) à flexibilité élevée est réalisée de manière déformable élastiquement et à la manière d'un tube à ailettes ou d'un soufflet à plis, et sachant que la section (11) à flexibilité élevée est constitué d'un matériau métallique, de préférence d'un acier inoxydable.

2. Filtre à alluvions selon la revendication 1, **caractérisé en ce que** les éléments de filtrage (4) sont réalisés au moins au niveau de leur section de filtrage ou de criblage (8) de manière plus rigide qu'au niveau des sections (11) à flexibilité élevée.

3. Filtre à alluvions selon la revendication 1 ou 2, **caractérisé en ce que** les sections (11) à flexibilité élevée ne présentent pas la structure de filtrage ou de criblage.

4. Filtre à alluvions selon l'une quelconque des revendications précédentes, **caractérisé en ce que** les éléments de filtrage (4) sont fabriqués au moins dans des zones partielles à partir d'un matériau métallique, par exemple à partir d'un acier inoxydable ou à partir d'une matière plastique.
